# EUROPÄISCHE PATENTSCHRIFT

(11) **EP 1 733 953 B1**
(45) Veröffentlichungstag und Bekanntmachung des Hinweises auf die Patenterteilung: **30.07.2008**
(21) Anmeldenummer: 06011718.1
(22) Anmeldetag: 07.06.2006
(51) Int. Cl.: B62D 25/20, B62D 43/10, B62D 43/04

(54) **Hohlraummodulanordnung in Kraftfahrzeug**
Modular arrangement defining a cavity in a motor vehicle
Composant modulaire définissant une cavité dans un véhicule automobile

(30) Priorität: 13.06.2005 DE 102005027179
(43) Veröffentlichungstag der Anmeldung: 20.12.2006
(73) Patentinhaber: GM Global Technology Operations, Inc., Detroit, MI 48265-3000 (US)
(72) Erfinder: Heim, Gunther, 64367 Mühltal (DE); Hulbert, Jürgen, 65343 Eltville (DE); Schmidlin, Frank, 65474 Bischofsheim (DE); Stern, Andreas, 56581 Ehlscheid (DE)
(74) Vertreter: Daniel, Ulrich W.P.

(56) Entgegenhaltungen:
- EP-A- 1 084 942
- DE-A1- 10 131 318
- FR-A- 2 773 132
- US-A1- 2001 051 089

## Beschreibung

Die vorliegende Erfindung liegt auf dem technischen Gebiet der Kraftfahrzeugtechnik und betrifft eine Hohlraummodulanordnung in einem Kraftfahrzeug gemäss dem Oberbegriff des Anspruches 1.

In Kraftfahrzeugen werden Ersatzradmulden typischer Weise mit dem Fahrzeugboden, d. h. dem Fahrzeugbodenblech, an einer entsprechenden Aussparung bzw. Durchbrechung desselben verschweißt. Alternativ kann die Ersatzradmulde auch durch Tiefziehen des Fahrzeugbodenblechs geformt werden. Weiterhin ist beispielsweise aus der deutschen Patentanmeldung DE 101 31 318 A1 bekannt, eine aus Kunststoff oder Metallblech geformte Reserveradmulde mit einem Randflansch von oben her in eine entsprechende Öffnung einer Bodengruppe eines Kraftfahrzeugs einzulegen und mit einem mechanischen Verbindungsmittel daran zu befestigen.

Nachteilig hierbei ist, dass in der industriellen Serienfertigung die Reserveradmulde abhängig von der bei der Montage gewählten Befestigungsart lediglich nur aus einem bestimmten für die Befestigungsart geeigneten Werkstoff gefertigt ist. Eine wahlweise Änderung des Werkstoffs von Metall zu Kunststoff oder umgekehrt führt wegen der typischer Weise damit einher gehenden Änderung der Befestigungsart zu erhöhten Fertigungskosten. Weiterhin sind die herkömmlichen Reserveradmulden lediglich als Stauraum für ein Reserverad oder weitere Gegenstände vorgesehen, wobei eine über die Verwendung als Stauraum hinaus gehende Nutzung weder vorgesehen noch in der industriellen Serienfertigung technisch bzw. in ökonomischer Hinsicht in einfacher Weise zu realisieren ist.

Demgegenüber besteht die Aufgabe der vorliegenden Erfindung darin, eine Hohlraummodulanordnung in einem Kraftfahrzeug zur Verfügung zu stellen, welche eine Wahlfreiheit des verwendeten Materials für das Hohlraummodul in der industriellen Serienfertigung ohne eine damit einher gehende Erhöhung der Fertigungskosten ermöglicht und weitere Nutzungsmöglichkeiten, welche über die Verwendung als Stauraum hinaus gehen, ermöglicht. Zudem soll eine solche Hohlraummodulanordnung in der industriellen Serienfertigung bereits bei geringen Stückzahlen rentabel sein.

US 2001/051089 A1, die dem Oberbegriff des Anspruches 1 entspricht, beschreibt die Befestigung einer Lagerwanne an einem Flansch mittels Verbindungsmaterialien an der Außenseite des Fahrzeugbodens.

FR 2773132 A1 beschreibt die Befestigung eines Behälters mittels Befestigungsschrauben an den Seitenholmen eines Kraftfahrzeugs. Der Behälter ist mit einer Querstrebe versehen, die als Halterung für die Rückwand des Kraftfahrzeugs dient, wobei sich zwischen Rückwand und Querstrebe ein Stoßdämpfer befindet.

Erfindungsgemäß ist eine Hohlraummodulanordnung in einem Kraftfahrzeug gezeigt, welche wenigstens ein Hohlraummodul mit wenigstens einem Hohlraum zur Aufnahme wenigstens eines Gegenstands sowie eine Karosserieunterseite des Kraftfahrzeugs umfasst, wobei das Hohlraummodul an der Karosserieunterseite von unten her mittels einer Klebeverbindung befestigt ist.

Hierdurch kann in vorteilhafter Weise eine Wahlfreiheit des Materials des Hohlraummoduls erreicht werden, da eine Verklebung mit der Karosserieunterseite gleichermaßen für etwa ein metallisches Material oder einen Kunststoff möglich ist. Ferner eröffnet die erfindungsgemäße Hohlraummodulanordndung, bei welcher das Hohlraummodul von unter her an der Karosserieunterseite befestigt ist, in besonderer Weise über die Möglichkeit der Verwendung als Stauraum hinaus gehende weitere Nutzungsmöglichkeiten des Hohlraummoduls, und zwar auch bei solchen, bei denen ein Hindurchführen des Hohlraummoduls durch eine Durchbrechung bzw. Aussparung des Fahrzeugbodenblechs aufgrund räumlicher Hindernisse nicht möglich ist. Weiterhin können bereits bestehende Reserveradmulden in Kraftfahrzeugen in einfacher Weise auf die erfindungsgemäße Hohlraummodulanordnung umgerüstet werden, indem die Reserveradmulde entfernt wird und das Hohlraummodul der erfindungsgemäßen Hohlraummodulanordnung durch Verkleben mit der Karosserieunterseite befestigt wird.

In der erfindungsgemäßen Hohlraummodulanordnung ist an dem Hohlraummodul wenigstens ein Strukturverstärkungsabschnitt zur Verstärkung einer Karosserierückwand befestigt. Dies erweist sich insbesondere dann als vorteilhaft, wenn etwa eine Fahrzeugrückwand zur Befestigung des Hohlraummoduls mit einem Ausschnitt versehen worden ist und deshalb strukturell geschwächt, das heißt, weniger Steifheit aufweisen kann. Der Strukturverstärkungsabschnitt ist mit einer Kleberinne zur Aufnahme von Klebstoff zur Verklebung mit der Karosserierückwand versehen, wobei ein Rand der Karosserierückwand in den Klebstoff eintaucht, wodurch dieser in vorteilhafter Weise vor Korrosion geschützt ist.

Das Hohlraummodul der erfindungsgemäßen Hohlraummodulanordnung ist mit der Karosserieunterseite verklebt, wobei eine Verklebung vorzugsweise mit einer Unterseite eines Kraftfahrzeugbodenblechs. Zur Verklebung mit der Karosserieunterseite, insbesondere mit dem Fahrzeugbodenblech, ist vorzugsweise ein Klebeflansch an dem Hohlraummodul geformt. Ein derartiger Klebeflansch ermöglicht vorteilhaft eine vergleichsweise großflächige Verklebung des Hohlraummoduls mit der Karosserieunterseite, wodurch etwaige hohe Spannungen durch statische Lasten vermieden werden können. Weiterhin kann das Hohlraummodul wenigstens eine Kleberinne zur Aufnahme von Klebstoff zur Verklebung mit der Karosserieunterseite aufweisen. In eine derartige Kleberinne kann vorteilhaft eine Klebstoffraupe mit ausreichender Dicke eingebracht werden, um eine sichere Verklebung des Hohlraummoduls mit der Karosserieunterseite zu gewährleisten. Eine Klebstoffrinne ist insbesondere zur Verklebung des Hohlraummoduls mit einer insbesondere ausgeschnittenen Fahrzeugrückwand geeignet, welche in die Kleberaupe eintaucht, wodurch gleichzeitig ein Korrosionsschutz für den in die Klebstoffraupe eingetauchten Rand der Fahrzeugrückwand vorliegt. Eine Verklebung des Hohlraummoduls mit der Karosserieunterseite ist vorteilhaft so ausgebildet, dass das Hohlraummodul und die Karosserieunterseite wenigstens an einer Klebestelle zur Verklebung von Hohlraummodul und Karosserieunterseite etwa mittels eines Abstandshalters voneinander beabstandet sind. Hierdurch kann sichergestellt werden, dass eine Klebeverbindung eine ausreichende Dicke aufweist, um eine sichere Befestigung des Hohlraummoduls an der Karosserieunterseite in Hinblick auf die auftretenden Belastungen zu gewährleisten. Zur Verklebung des Hohlraummoduls mit der Karosserieunterseite kann jeder hierzu geeignete herkömmliche Klebstoff, wie etwa ein Kleber auf PU-Basis, eingesetzt werden.

In der erfindungsgemäßen Hohlraummodulanordnung kann das Fahrzeugbodenblech oberhalb des angeklebten Hohlraummoduls mit einer Durchbrechung bzw. Aussparung versehen sein. Eine Durchbrechung bzw. Aussparung ist insbesondere dann vorteilhaft, wenn das Hohlraummodul als Stauraum für etwa ein Reserverad, eine (Ersatz-)Batterie, einen Kinder- oder Notsitz, bzw. anderweitige Transportgüter, eingesetzt und von oben her zugänglich sein soll.

Das Hohlraummodul der erfindungsgemäßen Hohlraummodulanordnung kann jegliche Form haben, solange es mit wenigstens einem Hohlraum zur Aufnahme von wenigstens einem Gegenstand versehen ist. So kann das Hohlraummodul beispielsweise in seiner äußeren Form wannenförmig sein bzw. lediglich einen wannenförmigen Hohlraum haben. Das Hohlraummodul ist erfindungsgemäß mit wenigstens einer Öffnung versehen, die vorzugsweise zur Karosserieunterseite und/oder zur Fahrzeugrückseite hin offen ist. Eine Öffnung des Hohlraummoduls zur Karosserieunterseite hin ist in Verbindung mit einer Durchbrechung des Fahrzeugbodenblechs vorteilhaft, um die Nutzung des Hohlraummoduls als ein von oben zugänglicher Stauraum zu ermöglichen.

Das Hohlraummodul kann wahlweise aus einem Kunststoff, wie etwa ein zweikomponentiger Kunststoff ("SEC"), welcher insbesondere mit einer Faserverstärkung, wie Glasfaserverstärkung, versehen sein kann oder aus Blech, insbesondere Stahlblech, gefertigt sein. Es kann weiterhin, neben der Klebverbindung, mittels wenigstens einem weiteren mechanischen Verbindungsmittel, wie etwa einer Schraubverbindung, einer Nietverbindung, einer Schweißverbindung und/oder einer Klemmverbindung, an der Karosserieunterseite befestigt sein.

Bei einer weiteren vorteilhaften Ausgestaltung der Erfindung ist an dem Hohlraummodul wenigstens ein zur Fahrzeugrückseite hin ausziehbarer Lastenträger, wie etwa ein Fahrradträger, befestigt. Der Lastenträger kann hierbei an der Außenseite des Hohlraummoduls durch wenigstens ein mechanisches Befestigungsmittel befestigt sein. Alternativ ist es auch möglich, dass der Lastenträger im Hohlraum des Hohlraummoduls wenigstens teilweise aufgenommen ist, d. h im Hohlraum des Hohlraummoduls durch wenigstens ein mechanisches Verbindungsmittel befestigt ist. Damit der Lastenträger zur Fahrzeugrückseite hin ausgezogen werden kann, muss das Hohlraummodul eine zur Fahrzeugrückseite hin mündende Öffnung aufweisen. Gleichzeitig soll jedoch keine Durchbrechung des Fahrzeugbodenblechs vorhanden sein bzw. das Hohlraummodul keine zum Fahrzeugbodenblech hin mündende Öffnung aufweisen, um auf diese Weise zu vermeiden, dass Abgase in das Fahrzeuginnere gelangen können. Durch die Vormontierung des Lastenträgers am Hohlraummodul kann in einfacher Weise durch Montage des Hohlraummoduls an der Karosserieunterseite eine gleichzeitige Montage des Lastenträgers erreicht werden, wodurch vorteilhaft separate Montageschritte zur Montage des Lastenträgers an der Karosserieunterseite nicht notwendig sind.

Bei einer weiteren vorteilhaften Ausgestaltung der Erfindung weist das Hohlraummodul wenigstens ein an dessen Außenseite befestigtes Hitzeschutzschild zum Abschirmen von Wärmestrahlung auf, welche im Wesentlichen durch angrenzende Auspuffrohre erzeugt ist. Auf diese Weise kann in einfacher Weise durch Montage des Hohlraummoduls an der Karosserieunterseite eine gleichzeitige Montage des Hitzeschilds erreicht werden, wodurch vorteilhaft separate Montageschritte zur Montage des Hitzeschilds an der Karosserieunterseite nicht notwendig sind.

Die Erfindung erstreckt sich ferner auf ein Kraftfahrzeug mit einer wie oben beschriebenen Hohlraummodulanordnung.

Die Erfindung wird nun anhand von Ausführungsbeispielen näher erläutert, wobei Bezug auf die beigefügten Zeichnungen genommen wird. In den Zeichnungen sind gleiche bzw. gleich wirkende Elemente mit den gleichen Bezugszahlen bezeichnet. Es zeigen
- Fig. 1: eine schematische perspektivische Ansicht von schräg oben auf ein Fahrzeugbodenblech und ein Hohlraummodul in einer Explosionsdarstellung;
- Fig. 2: eine schematische perspektivische Ansicht von schräg oben auf eine Ausgestaltung eines Hohlraummoduls einer erfindungsgemäßen Hohlraummodulanordnung;
- Fig. 3: eine schematische perspektivische Ansicht von schräg oben auf ein Fahrzeugbodenblech und Fahrzeugrückseite, ein Hohlraummodul und eine Anhängerzugvorrichtung in einer Explosionsdarstellung;
- Fig. 4: eine schematische perspektivische Ansicht von unten auf einen Fahrzeugunterboden im Bereich einer herkömmlichen Ersatzradwanne;
- Fig. 5: eine schematische Teilschnittansicht einer möglichen Befestigungsweise des Hohlraummoduls an einem Fahrzeugbodenblech einer erfindungsgemäßen Hohlraummodulanordnung.

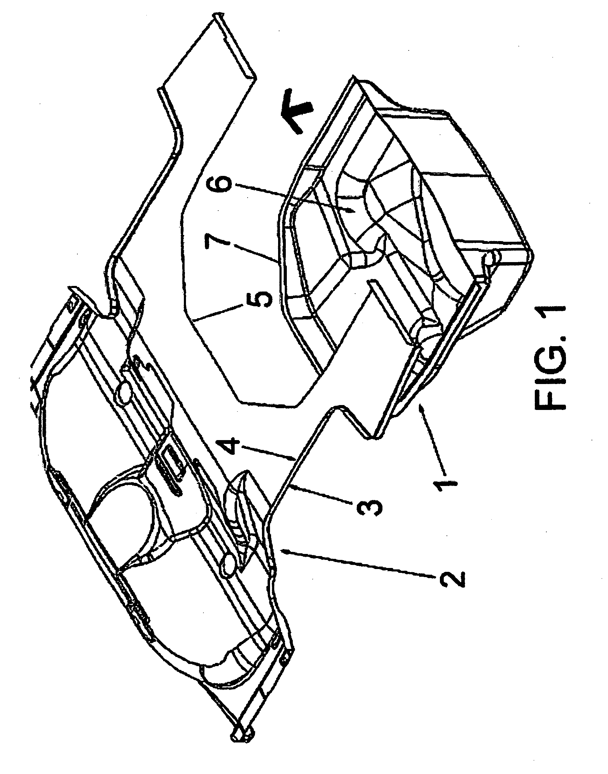

Es wird nun Bezug auf die Figur 1 genommen, worin eine schematische perspektivische Ansicht von schräg oben auf ein Fahrzeugbodenblech und ein Hohlraummodul in einer Explosionsdarstellung dargestellt ist. Demnach ist ein Hohlraummodul, welches insgesamt mit der Bezugszahl 1 bezeichnet ist, zur Befestigung an einer Unterseite 3 eines Fahrzeugbodenblechs, welches insgesamt mit der Bezugszahl 2 bezeichnet ist, eines Kraftfahrzeugs vorgesehen. Zur Befestigung des Hohlraummoduls 1 an dem Fahrzeugbodenblech 2 wird dieses in der angegebenen Pfeilrichtung verschoben und an der Fahrzeugunterseite durch Verkleben, beispielsweise mittels eines PU-Klebers, befestigt. Das Hohlraummodul 1 ist mit einem wannenförmigen Hohlraum 6 versehen, welcher insbesondere zur Aufnahme eines Reserverads, einer Fahrzeugbatterie, eines Kinder- oder Notsitzes und dergleichen, geeignet ist. Das Hohlraummodul 1 ist weiterhin mit einer Öffnung versehen, welche bei montiertem Hohlraummodul 1 zum Fahrzeugbodenblech 2 hin mündet. Ferner weist das Hohlraummodul 1 einen dessen Öffnung umlaufenden Klebeflansch 7 zur Verklebung mit dem Fahrzeugbodenblech 2 auf. Das Fahrzeugbodenblech 2 ist mit einer Aussparung (bzw. Ausschnitt) 5 versehen, wobei das Hohlraummodul 1 so am Fahrzeugbodenblech 2 montiert werden soll, dass die Öffnung des Hohlraummoduls 1 wenigstens teilweise, vorzugsweise im Wesentlichen vollständig, unterhalb der Aussparung 5 des Fahrzeugbodenblechs 2 zu liegen kommt, so dass der Hohlraum 6 des Fahrzeugbodenblechs 2 von oben her, durch die Aussparung 5 des Fahrzeugbodenblechs 2 hindurch, zugänglich ist. Für eine Montage des Hohlraummoduls 1 am Fahrzeugbodenblech 2 ist es vorteilhaft, wenn das Hohlraummodul 1 zusätzlich an (nicht gezeigten) Schweißbolzen verschraubt wird, um eine geeignete Positionierung des Hohlraummoduls 1 bis zur vollständigen Aushärtung des Klebstoffs zu gewährleisten.

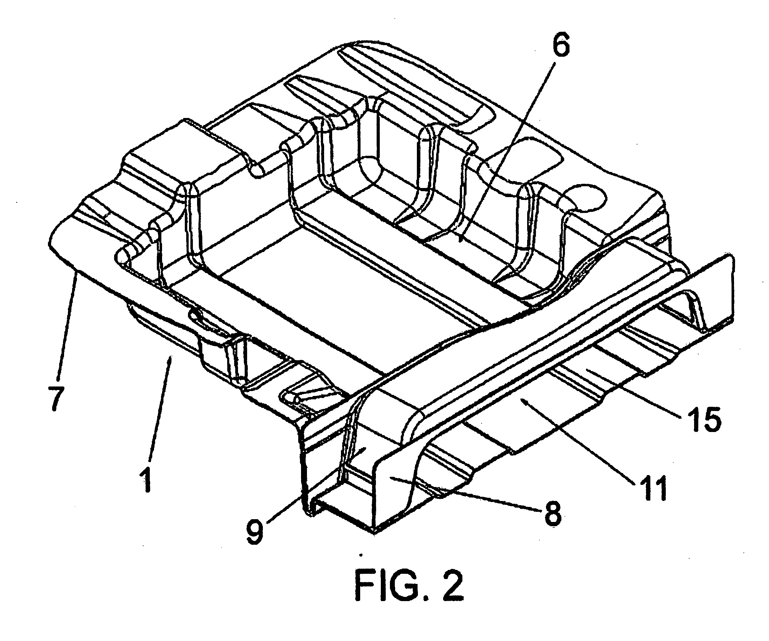

In Fig. 2 ist ein schematische perspektivische Ansicht von schräg oben auf eine Ausgestaltung eines Hohlraummoduls einer erfindungsgemäßen Hohlraummodulanordnung dargestellt. Hierbei ist das Hohlraummodul 1 zusätzlich mit einem Strukturverstärkungsabschnitt 8 versehen, der am Hohlraummodul 1 beispielsweise mittels einer (nicht gezeigten) Verschraubung und/oder Verklebung befestigt ist, wobei zu diesem Zweck auch jedes andere mechanische Verbindungsmittel verwendet werden kann. Alternativ kann der Strukturverstärkungsabschnitt 8 einstückig bzw. einteilig mit dem Hohlraummodul 1 ausgebildet sein. Der Strukturverstärkungsabschnitt 8 ist mit einer Kleberinne 9 zur Aufnahme vom Klebstoff zur Verklebung des Strukturverstärkungsabschnitts 8 mit einer Fahrzeugrückwand versehen. Der Strukturverstärkungsabschnitt 8 umgrenzt weiterhin gemeinsam mit einem Bodenabschnitt 15 des Hohlraummoduls 1 eine in montierter Stellung des Hohlraummoduls 1 zur Fahrzeugrückseite hin mündende Durchgangsöffnung 11.

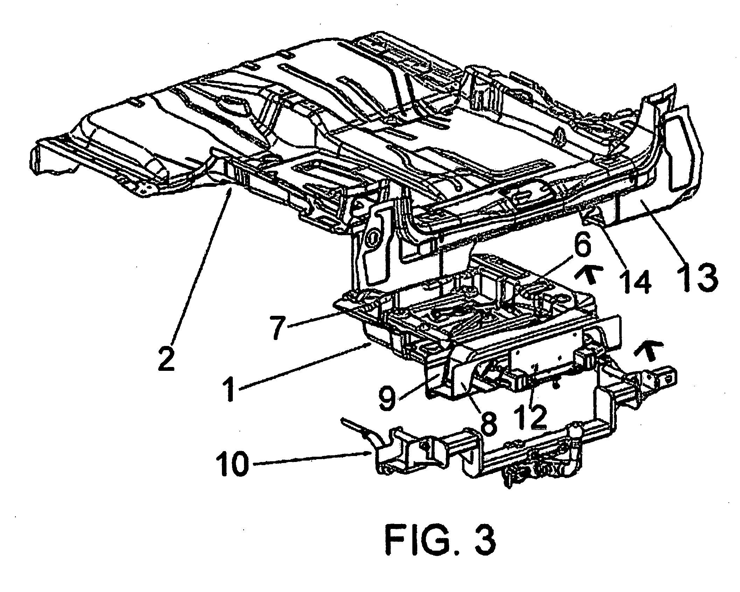

Fig. 3 zeigt eine schematische perspektivische Ansicht von schräg oben auf ein Fahrzeugbodenblech 2 mit unterer Fahrzeugrückwand 13, ein Hohlraummodul 1, wie es in Fig. 2 erläutert ist, sowie eine Anhängerzugvorrichtung, die insgesamt mit der Bezugszahl 10 bezeichnet ist, in einer Explosionsdarstellung. Im Hohlraum 6 des Hohlraummoduls 1 ist zusätzlich ein zur Fahrzeugrückseite hin ausziehbarer Lastenträger, der insgesamt mit der Bezugszahl 12 bezeichnet ist, angeordnet. Der Lastenträger ist hierbei am Bodenabschnitt 15 des Hohlraummoduls 1 mittels eines mechanischen Verbindungsmittels, wie einer Schraubverbindung oder Klebverbindung, befestigt, und kann durch die Durchgangsöffnung 11 hindurch zur Fahrzeugrückseite hin ausgezogen werden. Der Lastenträger 12 dient hierbei im ausgezogenen Zustand beispielsweise zur Beförderung von Fahrrädern. Jedoch ist auch die Beförderung von anderen Lastgütern vorgesehen. Zur Montage des Hohlraummoduls 1 wird dieses an seinem Klebeflansch 7, sowie dem Klebkanal 9 des Strukturverstärkungsabschnitts 8 an dem Fahrzeugbodenblech 2 und der unteren Fahrzeugrückwand 13 befestigt, wobei weitere mechanische Verbindungsmittel bis zur vollständigen Aushärtung des Klebstoffs oder auch nach der vollständigen Aushärtung des Klebstoffs vorgesehen sein können. Das Fahrzeugbodenblech 2 weist hierbei keine Aussparung bzw. Durchbrechung auf, welche oberhalb der im montierten Zustand des Hohlraummoduls 1 zur Fahrzeugunterseite hin mündenden Öffnung liegt, um zu vermeiden, dass Abgase in das Fahrzeuginnere gelangen. Zur Verklebung des Hohlraummoduls 1 mit der Karosserieunterseite wird das Hohlraummodul 1 in der angegebenen Pfeilrichtung bewegt und der mit Klebstoff bestrichene Klebeflansch 7 mit der Unterseite des Fahrzeugbodenblechs 2 verklebt, während eine Aussparung 14 der Fahrzeugrückwand 13 in die mit Klebstoff gefüllte Kleberinne 9 des Strukturverstärkungsabschnitts 8 eintaucht. Durch das Eintauchen eines Randbereichs der Aussparung 14 der Fahrzeugrückwand 13 in die mit Klebstoff gefüllte Kleberinne 9 wird dieser vorteilhaft vor Korrosion geschützt. Der Strukturverstärkungsabschnitt 8 dient bei montiertem Hohlraummodul 1 gleichzeitig zur Verstärkung (Versteifung) der Fahrzeugrückwand 13, welche durch die Aussparung 14 eine strukturelle Schwächung erfahren hat. Nach erfolgter Montage des Hohlraummoduls 1 wird die Anhängerzugvorrichtung 10 in der angegebenen Pfeilrichtung zur Fahrzeugunterseite gebracht und mit dieser durch ein mechanisches Verbindungsmittel, wie beispielsweise einer Schraubverbindung, verbunden. Die Anhängerzugvorrichtung 10 dient dabei vorteilhaft als eine Stützvorrichtung für den ausziehbaren Lastenträger 12.

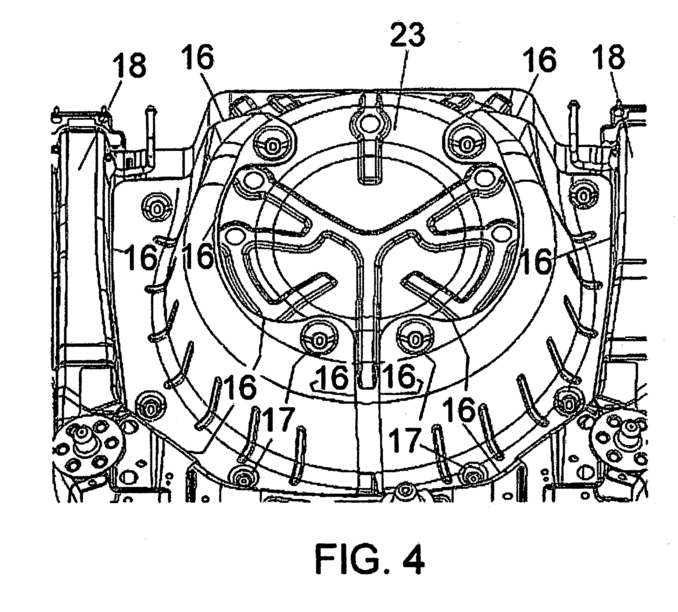

Fig. 4 zeigt eine schematische perspektivische Ansicht von unten auf einen Fahrzeugunterboden im Bereich einer herkömmlichen Reserveradwanne 23, an welcher Auspuffhitzeschutzschilder mittels Befestigungsschweißbolzen 17 befestigt sind. Anstelle der Reserveradwanne 23 kann ein erfindungsgemäßes Hohlraummodul vorgesehen werden, wobei die Befestigungsschweißbolzen 17 gleichzeitig zur Fixierung des Hohlraummoduls dienen können. Die Hitzeschutzschilde 16 dienen hierbei zur Abschirmung von Wärmestrahlung, welche von den angrenzenden Auspuffrohren, die insgesamt mit der Bezugszahl 18 bezeichnet sind, abgegeben wird. Durch die Hitzeschutzschilde 16 kann das Hohlraummodul und dessen im Hohlraum aufgenommener Inhalt in wirkungsvoller Weise vor einer thermischen Beeinträchtigung bzw. sogar Beschädigung bewahrt werden.

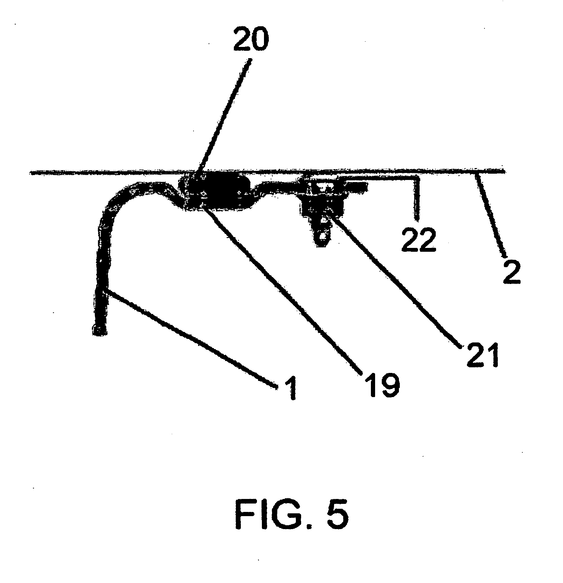

Schließlich ist in Fig. 5 eine schematische Ansicht einer möglichen Befestigung des Hohlraummoduls 1 am Fahrzeugbodenblech 2 einer erfindungsgemäßen Hohlraummodulanordnung dargestellt. Demnach ist das Hohlraummodul 1 neben einer Verklebung mittels einer Schraubverbindung 21 mit dem Fahrzeugbodenblech 2 verbunden. Um eine zu starke Quetschung bzw. Pressung der Klebstellen/Klebflächen bzw. Klebstoffraupen zu vermeiden, wodurch deren Stärke in unerwünschter Weise verringert werden kann, ist das Hohlraummodul mit einer den Abstand des Hohlraummoduls 1 zum Fahrzeugbodenblech 2 vergrößernden Auskehlung 19 versehen, in die eine Klebstoffraupe 20 zur Verklebung des Hohlraummoduls 1 mit dem Fahrzeugbodenblech 2 eingebracht wird. Zudem ist in der Schraubverbindung 21 zwischen dem Hohlraummodul 1 und dem Fahrzeugbodenblech 2 ein Abstandshalter 22 angeordnet, durch welchen das Hohlraummodul 1 im montierten Zustand vom Fahrzeugbodenblech 2 beabstandet ist. Auf diese Weise können ausreichend dicke Klebverbindungsstellen für eine sichere Befestigung des Hohlraummoduls am Fahrzeugbodenblech 2 gewährleistet werden.

Wie gezeigt wurde, ermöglicht das Hohlraummodul der erfindungsgemäßen Hohlraummodulanordnung im Unterschied zu einer herkömmlichen Reserveradmulde vielfache Möglichkeiten der Nutzung, welche über die Verwendung als bloßer Stauraum hinaus gehen. Durch die Bezeichnung "Hohlraummodul" soll klargestellt werden, dass verschiedene, optionale Nutzungsmöglichkeiten, wie sie oben in Form von bevorzugten Ausgestaltungen beispielhaft aufgezeigt wurden, in der industriellen Serienfertigung in einfacher Weise und im Wesentlichen kostenneutral realisiert werden können.

### Bezugszeichenliste

- 1: Hohlraummodul
- 2: Fahrzeugbodenblech
- 3: Fahrzeugbodenblechunterseite
- 4: Fahrzeugbodenblechoberseite
- 5: Ausschnitt
- 6: Hohlraum
- 7: Klebeflansch
- 8: Strukturverstärkungselement
- 9: Kleberinne
- 10: Anhängerzugvorrichtung
- 11: Durchgangsöffnung
- 12: Lastenträger
- 13: Fahrzeugrückseite
- 14: Aussparung
- 15: Bodenabschnitt
- 16: Hitzeschutzschild
- 17: Schraubverbindung
- 18: Auspuffrohr
- 19: Auskehlung
- 20: Klebstoffraupe
- 21: Verschraubung
- 22: Abstandshalter
- 23: Reserveradwanne

## Patentansprüche

1. Hohlraummodulanordnung, welche wenigstens ein Hohlraummodul (1) mit wenigstens einem Hohlraum (6), angeordnet an einer Karosserieunterseite einer Kraftfahrzeugkarosserie, umfasst, wobei das Hohlraummodul an der Karosserieunterseite von unten her mittels einer Klebeverbindung befestigt ist, **dadurch gekennzeichnet, dass** an dem Hohlraummodul wenigstens ein Strukturverstärkungsabschnitt (8) zur Verstärkung einer Karosserierückwand (13) geformt ist, und dass der Strukturverstärkungsabschnitt (8) mit einer Kleberinne (9) zur Aufnahme von Klebstoff zur Verklebung mit der Karosserierückwand (13) versehen ist, wobei ein Rand der Karosserierückwand (13) in den Klebstoff eintaucht.

2. Anordnung nach Anspruch 1,**dadurch gekennzeichnet, dass** das Hohlraummodul (1) mit einem Klebeflansch (7) zur Verklebung mit der Karosserieunterseite (3) versehen ist.

3. Anordnung nach einem der vorhergehenden Ansprüche 1 bis 2, **dadurch gekennzeichnet, dass** das Hohlraummodul wenigstens eine Kleberinne zur Aufnahme von Klebstoff zur Verklebung mit der Karosserieunterseite (3) aufweist.

4. Anordnung nach einem der vorhergehenden Ansprüche 1 bis 3, **dadurch gekennzeichnet, dass** das Hohlraummodul (1) mit einer Unterseite (3) eines Kraftfahrzeugbodenblechs verklebt ist.

5. Anordnung nach einem der vorhergehenden Ansprüche 1 bis 4, **dadurch gekennzeichnet, dass** das Hohlraummodul (1) und die Karosserieunterseite (3) wenigstens an Klebestellen zur Verklebung von Hohlraummodul und Karosserieunterseite voneinander beabstandet sind.

6. Anordnung nach einem der vorhergehenden Ansprüche 1 bis 5, **dadurch gekennzeichnet, dass** das Hohlraummodul aus einem oder mehreren Materialien, gewählt aus Kunstoff, insbesondere mit einer Faserverstärkung, wie einer Glasfaserverstärkung, und Blech, insbesondere Stahlblech, gefertigt ist.

7. Anordnung nach einem der vorhergehenden Ansprüche 1 bis 6, **dadurch gekennzeichnet, dass** das Hohlraummodul (1) mittels wenigstens einem weiteren mechanischen Verbindungsmittel (17), insbesondere gewählt aus einer Schraubverbindung, Nietverbindung, Schweißverbindung und Klemmverbindung, an der Karosserieunterseite (3) befestigt ist.

8. Anordnung nach einem der vorhergehenden Ansprüche 1 bis 7, **dadurch gekennzeichnet, dass** ein Kraftfahrzeugbodenblech (2) oberhalb des Hohlraummoduls (1) mit wenigstens einer Durchbrechung (5) versehen ist.

9. Anordnung nach einem der vorhergehenden Ansprüche 1 bis 8, **dadurch gekennzeichnet, dass** das Hohlraummodul (1) mit wenigstens einer zur Karosserieunterseite hin mündenden Öffnung versehen ist.

10. Anordnung nach einem der vorhergehenden Ansprüche 1 bis 9, **dadurch gekennzeichnet, dass** das Hohlraummodul mit wenigstens einer zur Fahrzeugrückseite hin mündenden Öffnung (11) versehen ist.

11. Anordnung nach einem der vorhergehenden Ansprüche 1 bis 10, **dadurch gekennzeichnet, dass** das Hohlraummodul (1) einen wannenförmigen Hohlraum (6) aufweist.

12. Anordnung nach einem der vorhergehenden Ansprüche 1 bis 11, **dadurch gekennzeichnet, dass** an dem Hohlraummodul (1) wenigstens ein zur Fahrzeugrückseite hin ausziehbarer Lastenträger (12) befestigt ist.

13. Anordnung nach Anspruch 12, **dadurch gekennzeichnet, dass** der Lastenträger (12) im Hohlraum (6) des Hohlraummoduls (1) wenigstens teilweise aufgenommen ist.

14. Anordnung nach einem der vorhergehenden Ansprüche 1 bis 13, **dadurch gekennzeichnet, dass** das Hohlraummodul (1) wenigstens ein an dessen Außenseite befestigtes Hitzeschutzschild (16) zum Abschirmen von Wärmestrahlung aufweist.

15. Kraftfahrzeug mit einer Hohlraummodulanordnung nach einem der vorhergehenden Ansprüche 1 bis 14.

## Claims

1. Modular arrangement defining a cavity in a motor vehicle, which includes at least one cavity module (1) with at least one cavity (6) arranged on the underside of a motor vehicle body, wherein the cavity module is attached to the motor vehicle underside from the bottom by a bond, **characterized in that** at least one structure reinforcing section (8) for the reinforcement of the motor vehicle back wall (13) is formed on the cavity module, and that the structure reinforcement section (8) is provided with a glue channel (9) for the absorption of the binding agent used for bonding to the car body back wall (13), wherein the edge of the car body back wall (13) is immersed in the binding agent.

2. Arrangement according to Claim 1, **characterized in that** the cavity module (1) is provided with a binding flange (7) for the binding with the car body underside (3).

3. Arrangement according to one of the previous claims 1 through 2, **characterized in that** the cavity module comprises at least one glue channel (9) for the absorption of the binding agent used for binding the car body underside (3).

4. Arrangement according to one of the previous claims 1 through 3, **characterized in that** the cavity module (1) is bonded to the underside (3) of a motor vehicle floor pan.

5. Arrangement according to one of the previous claims 1 through 4, **characterized in that** the cavity module (1) and the car body underside (3) are spaced apart from each other at least in places designated for binding the cavity module and the car body underside.

6. Arrangement according to one of the previous claims 1 through 5, **characterized in that** the cavity module is manufactured from one or more materials selected from synthetic materials, in particular with reinforced fibers such as a glass fiber reinforcement, and sheet metal, in particular sheet steel.

7. Arrangement according to one of the previous claims 1 through 6, **characterized in that** the cavity module (1) is attached through at least one further mechanical binding agent (17) to the car body underside, particularly selected from: a bolted connection, a riveted connection, a welded connection and a crimped connection.

8. Arrangement according to one of the previous claims 1 through 7, **characterized in that** a motor vehicle floor pan (2) is provided above the cavity module (1) with at least one opening.

9. Arrangement according to one of the previous claims 1 through 8, **characterized in that** the cavity module (1) is provided with at least one opening facing the car body underside.

10. Arrangement according to one of the previous claims 1 through 9, **characterized in that** the cavity module is provided with at least one opening (11) facing towards the motor vehicle backside.

11. Arrangement according to one of the previous claims 1 through 10, **characterized in that** the cavity module (1) comprises a tub-shaped cavity (6).

12. Arrangement according to one of the previous claims 1 through 11, **characterized in that** at least one load carrier (12), extendible in the direction of the motor vehicle backside, is fastened to the cavity module (1).

13. Arrangement according to claim 12, **characterized in that** the load carrier (12) is partially incorporated in the cavity (6) of the cavity module (1).

14. Arrangement according to one of the previous claims 1 through 13, **characterized in that** the cavity module (1) comprises at least one heat shield (16) fastened to its outer side to protect it from heat radiation.

15. Motor vehicle with a modular cavity arrangement according to one of the previous claims 1 through 14.

## Revendications

1. Composant modulaire définissant une cavité, comportant au moins un module définissant une cavité (1) avec au moins une cavité (6), disposée sous caisse d'un véhicule automobile, étant donné que ce module définissant une cavité est fixé à l'aide d'une liaison par collage par en bas, sur sous caisse, est **caractérisé en ce que** au niveau du module définissant une cavité est formé au moins une section de renforcement de structure (8) qui permet un renforcement du panneau arrière de carrosserie (13), et **en ce que** la section de renforcement de structure (8) est menue d'une rigole de collage (9) pour la réception de colle pour un collage avec le panneau arrière (13), étant donné qu'un bord du panneau arrière (13) est immergé dans la colle.

2. Composant selon revendication 1, **caractérisé en ce que** le module définissant une cavité (1) est menu d'une bride de collage (7) pour le collage avec sous caisse (3).

3. Composant selon l'une des revendications précédentes 1 à 2, **caractérisé en ce que** le module définissant une cavité présente au moins une rigole de collage pour la réception de colle dans le but d'un collage avec sous caisse (3).

4. Composant selon l'une des revendications précédentes 1 à 3, **caractérisé en ce que** le module définissant une cavité (1) est collé avec une face inférieure (3) d'un tôle de plancher du véhicule mobile.

5. Composant selon l'une des revendications précédentes 1 à 4, **caractérisé en ce que** le module définissant une cavité (1) et sous caisse (3) sont écartés l'un de l'autre, au moins aux niveaux des endroits prévues pour le collage entre module définissant une cavité et sous caisse.

6. Composant selon l'une des revendications précédentes 1 à 5, **caractérisé en ce que** le module définissant une cavité est fabriqué d'un ou plusieurs matériels, de préférence en plastique particulièrement en plastique renforcé avec des fibres comme les fibres de verre, et en tôle, particulièrement en tôle d'acier.

7. Composant selon l'une des revendications précédentes 1 à 6, **caractérisé en ce que** le module définissant une cavité (1) est fixé sous caisse (3) à l'aide d'au moins un autre moyen mécanique de liaison (17), de préférence on choisi parmi un assemblage par vissage, assemblage par rivets, assemblage par soudage et un assemblage par serrage.

8. Composant selon l'une des revendications précédentes 1 à 7, **caractérisé en ce que** le tôle de plancher du véhicule mobile (2) est équipé d'au moins un franchissement (5) au dessus du module définissant une cavité (1).

9. Composant selon l'une des revendications précédentes 1 à 8, **caractérisé en ce que** le module définissant une cavité (1) est menu au moins d'une ouverture débouchant vers la sous caisse.

10. Composant selon l'une des revendications précédentes 1 à 9, **caractérisé en ce que** le module définissant une cavité (1) est menu au moins d'une ouverture (11) débouchant vers l'arrière du véhicule.

11. Composant selon l'une des revendications précédentes 1 à 10, **caractérisé en ce que** le module définissant une cavité (1) présente une cavité en forme de baignoire (6).

12. Composant selon l'une des revendications précédentes 1 à 11, **caractérisé en ce que** au moins un porte-charge (12) extractible vers l'arrière du véhicule, est fixé au module définissant une cavité (1).

13. Composant selon revendication 12, **caractérisé en ce que** le porte-charge (12) est au moins partiellement inclus dans la cavité (6) du module définissant une cavité (1).

14. Composant selon l'une des revendications précédentes 1 à 13, **caractérisé en ce que** le module définissant une cavité (1) présente au moins un bouclier thermique (16) fixé à sa face externe dans le but d'une protection contre les radiations thermiques.

15. Véhicule automobile avec un composant modulaire définissant une cavité selon l'une des revendications précédentes 1 à 14.
